# EUROPÄISCHE PATENTANMELDUNG

(11) **EP 1 018 459 A1**
(43) Veröffentlichungstag der Anmeldung: **12.07.2000**
(21) Anmeldenummer: 99125493.9
(22) Anmeldetag: 21.12.1999
(51) Int. Cl.: B60T 11/228, B60T 11/232

(54) **Hauptzylinder**

(30) Priorität: 04.01.1999 DE 19900048
(71) Anmelder: Continental Teves AG & Co. oHG, 60488 Frankfurt (DE)
(72) Erfinder: Drumm, Stefan A., 55291 Saulheim (DE); Berntheusel, Jörg, 60431 Frankfurt / Main (DE)
(74) Vertreter: Neumann, Stephan

(57) **Zusammenfassung**

Die Erfindung betrifft einen Hauptzylinder 1, insbesondere Tandem-Hauptbremszylinder für hydraulische Mehrkreisbremsanlagen von Kraftfahrzeugen, mit einem Gehäuse 4 mit Längsbohrung 5 für zwei hierin geführte Kolben 6,7, welche der Druckerzeugung in jeweils einer zugeordneten Druckkammer 8,9 im Gehäuse 4 dienen, und mit jeweils einer hydraulischen Verbindung 12,13 zwischen jeder Druckkammer 8,9 und einem Flüssigkeitsbehälter 14, welche jeweils ein Ventil 15,16 aufweist, welches die Verbindung 12,13 bei unbetätigter Bremsanlage für einen Druckausgleich öffnet, und die Verbindung 12,13 bei Bremsbetätigung oder beabsichtigter Bremsbetätigung für einen Druckanstieg verschließt. Es ist eine Synchronisiervorrichtung 17 mit Öffnungs- und/oder Schließelementen zum synchronisiert zeitgleichen Öffnen und/oder Schließen der beiden Ventile 15,16 derart vorgesehen, daß sie eine öffnende oder schließende Stellbewegung auf beide Ventile 15,16 überträgt, so daß der Druckanstieg oder der Druckausgleich in wenigstens zwei Bremskreisen gleichzeitig erfolgt.

## Beschreibung

Die Erfindung betrifft einen Hauptzylinder, insbesondere Tandem-Hauptzylinder für hydraulische Mehrkreisbremsanlagen von Kraftfahrzeugen, mit einem Gehäuse mit Längsbohrung für zwei hierin geführte Kolben, welche der Druckerzeugung in jeweils einer zugeordneten Druckkammer im Gehäuse dienen, und mit jeweils einer hydraulischen Verbindung zwischen jeder Druckkammer und einem Flüssigkeitsbehälter, der jeweils ein Ventil zugeordnet ist, welches die Verbindung bei unbetätigter Bremsanlage für einen Druckausgleich öffnet, und die Verbindung bei Betätigung oder beabsichtigter Betätigung für die Druckerzeugung verschließt.

Ein derartiger Hauptzylinder wird üblicherweise durch Fußkraft und eine Hilfskraft, beispielsweise Druckluft, Vakuum, hydraulischen Druck, oder ähnlichem betätigt. Über den Hauptzylinder wird bekanntermaßen der gesamte Bremsvorgang eines Kraftfahrzeuges eingeleitet und gesteuert. Dabei befördert beim Tritt auf das Bremspedal der Kolben des Hauptzylinders üblicherweise Bremsflüssigkeit, die sich im Bremssystem befindet, in zugehörige Scheibenbrems- bzw. Radbremszylinder. Die bekannten Hauptzylinder sind selbstverständlich zur Verwendung mit Antiblockiereinrichtungen, Fahrstabilitätsregelsystemen und anderen, die Fahrdynamik betreffenden elektrohydraulischen Vorrichtungen geeignet und bestimmt.

Die genannten Ventile müssen bei gelöster, unbetätigter Bremsanlage offen sein, um einen vollständigen Druckausgleich im Bremssystem zu gewährleisten. Ein solcher Ausgleich ist insbesondere erforderlich, weil die im Hauptzylinder, im Leitungsnetz und in den Betätigungszylindern (Scheibenbremsen- bzw. Radzylinder) eingeschlossene (Brems-) Flüssigkeit Einflüssen, insbesondere temperaturbedingter Ausdehnung unterworfen sein kann, welche einen Mengen- und Druckausgleich erfordert, damit Beschädigungen der Bremsanlage verhindert werden können.

üblicherweise sind die Ventile als sogenannte Zentralventile in die Kolben des Hauptzylinders integriert und sind im unbetätigten Zustand geöffnet, werden aber im Verlauf des Betätigungsvorgangs fhr den Druckaufbau geschlossen. Für einen annähernd gleichen Öffnungszeitpunkt von Zentralventilen ist der Kolben des Sekundärkreis mit einer geringeren Federkraft elastisch vorgespannt, als der Kolben des Druckstangenkreis. Dies bewirkt, daß eine Betätigung zunächst nur zu einer Kolbenverschiebung verbunden mit einer elastischen Federverformung im Sekundärkreis führt, während der Druckstangenkolben zusammen mit der ihm zugeordneten Feder einfach und ohne elastische Verformung verschoben wird. Weil folglich unterschiedliche Federraten erforderlich sind, und von der Federabstimmung letztendlich der Schaltzeitpunkt der beiden Ventile abhängt, ist es erforderlich die Federraten sehr sorgfältig und bezüglich der Toleranzlage äußerst fein aufeinander abzustimmen. Anderenfalls würde der Druckaufbau beziehungsweise der Druckabbau in den beiden Hydraulikkreisen nicht gleichzeitig, das heißt gewissermaßen asymmetrisch erfolgen. Weil infolgedessen die Bremsleistung zumindest in einem Bremskreis verzögert erzeugt wird, führt dies bei einer diagonalen Bremskreisaufteilung zu unerwünschtem Schiefziehen des Fahrzeuges um seine Hochachse und bei einer sogenannten Schwarz-Weiß-Aufteilung zu einem verlängerten Bremsweg.

Bei anderen Bauformen sind für die Ventilfunktion Wandbohrungen in dem Gehäuse vorgesehen, welche in Abhängigkeit von der Verschiebungsbewegung von Kolben mit einer Dichtmanschette überfahren werden. Dies führt den gewünschten Öffnungs- oder Verschlußvorgang der Verbindung herbei.

Aus der Auslegeschrift DE 20 65 012 ist schließlich ein Hauptzylinder für ein Flugzeug bekannt, welcher für einen ersten Hydraulikkreis ein Ventil in einer Verbindung zu einem Behälter und ein Ventil in einer Verbindung zu einer Druckmittelquelle aufweist. Das Öffnungs- und Schließverhalten der beiden Ventile ist abhängig von dem Verfahrweg des Druckstangenkolbens und es ist vorgesehen, daß das zweite Ventil öffnet, nachdem das erste Ventil geschlossen worden ist, und der Druckstangekolben nach dem Verschluß weiter vorwärtsbewegt worden ist.

Eine Aufgabe der vorliegenden Erfindung ist es, einen Hauptzylinder bereitzustellen, welcher ein verbessertes Ansteuerverhalten der genannten Ventile besitzt. Eine weitere Aufgabe der Erfindung ist es, den Kostenaufwand bei der Herstellung des Hauptzylinders, insbesondere hinsichtlich der Einstellung und Abstimmung des Schließverhaltens der Ventile zu verringern.

Erfindungsgemäß werden diese Aufgaben dadurch gelöst, daß eine Synchronisiervorrichtung mit Öffnungs- und/oder Schließelementen zum synchronisiert zeitgleichen Öffnen und/oder Schließen der beiden Ventile derart vorgesehen ist, daß sie eine öffnende oder schließende Stellbewegung auf beide Ventile überträgt, so daß der Druckanstieg oder der Druckausgleich in wenigstens zwei Bremskreisen gleichzeitig erfolgt.

Die Erfindung erlaubt es folglich, mit Hilfe der Synchronisiervorrichtung von einem kostenträchtigen Federabstimmungsvorgang Abstand zu nehmen. Es wird insbesondere ermöglicht, zur Vorspannung der beiden Kolben Federn mit übereinstimmender Federrate zu verwenden, so daß die Anzahl konstruktiv gleicher Teile gesteigert und auch auf diesem Wege die Kosten zusätzlich gesenkt werden können.

Vorteilhafte Einzelheiten der Erfindung und abgewandelte Ausführungsformen gehen aus Unteransprüchen im Zusammenhang mit der Beschreibung und der Zeichnung hervor. In der Zeichnung zeigt:

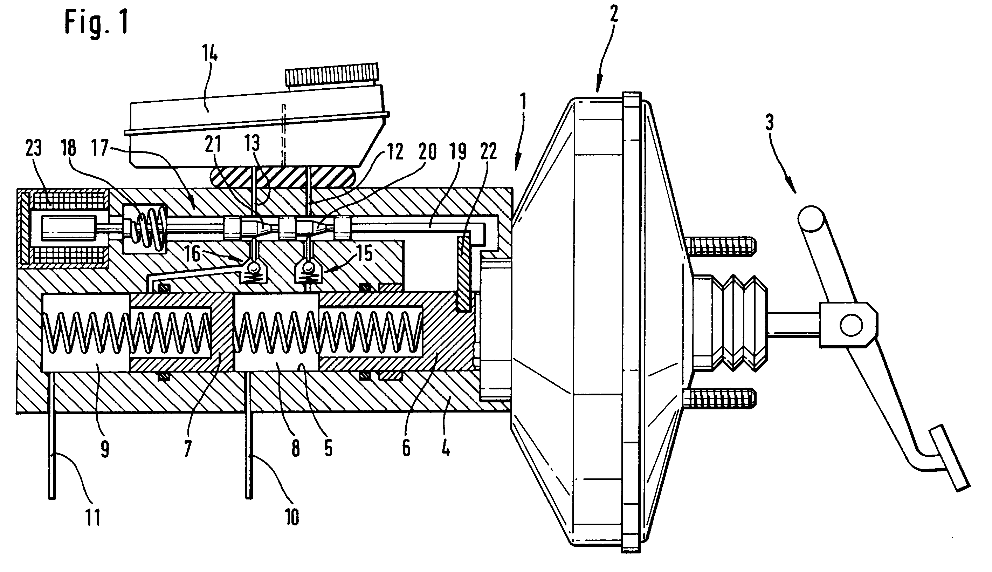

- Fig. 1: Prinzipskizze einer Betätigungseinheit mit einem erfindungsgemäßen Hauptzylinder in unbetätigter Lösestellung im Längsschnitt sowie in anderem Maßstab,
- Fig. 2: die Betätigungseinheit Gemäß Fig. 1 in Bremsbetätigungsstellung,
- Fig. 3: die Betätigungseinheit Gemäß Fig. 1 in einer fahrerunabhängigen Bremsbetätigungsstellung, und
- Fig. 4: eine zweite Ausführungsform der Erfindung mit an einem Pedal angelenkter Synchronisiervorrichtung.

Die Figuren zeigen stark schematisiert eine Betätigungseinheit für eine hydraulische Fahrzeugbremsanlage mit einem Hauptzylinder 1, insbesondere Hauptbremszylinder für zwei unabhängige Bremskreise, einem Bremskraftverstärker 2, insbesondere pneumatischem Bremskraftverstärker sowie mit einer vorzugsweise an einem Pedalbock angelenkten Pedalanordnung 3. Der Hauptzylinder weist in seinem grundsätzlichen Aufbau ein Gehäuse 4 mit Längsbohrung 5 für zumindest einen hierin axial bewegbar geführte Kolben 6, 7 auf. Nach der gezeigten Darstellung handelt es sich bei den Kolben 6, 7 um einen ersten direkt betätigten, primären oder Druckstangenkolben 6 sowie einen zweiten, sekundären oder Schwimmkolben 7, welcher mittelbar betätigbar ist. Jeder der beiden Kolben 6, 7 arbeitet auf eine zugehörige Druckkammer 8, 9. Dabei gehört die Druckkammer 8 zu dem primären Kolben 6, während der sekundäre Kolben 7 auf die Druckkammer 9 einwirkt. Zumeist wirkt ein nicht gezeichnetes Ausgangsglied des Bremskraftverstärkers 2 unmittelbar auf den Druckstangenkolben 6.

In jede der Druckkammern 8,9 mündet jeweils ein zu einer Radbremse oder einem zwischengeschalteten elektrohydraulischen Aggregat (beispielsweise ABS oder ESP-Ventilblock) führender Leitungsanschluß 10,11 des betreffenden Bremskreis sowie eine davon unabhängige hydraulische Verbindung 12, 13 zu einem Flüssigkeitsgehälter 14. Jede der beiden Verbindungen 12, 13 ist mit einem Ventil 15,16 versehen, welches sich grundsätzlich an jedem Ort innerhalb der Verbindung und gemäß dem figurgemäßen bevorzugten Ausführungsbeispiel innerhalb des Gehäuse 4 nahe der Druckkammern 8,9 befindet, weil damit der Vorteil verbunden ist, daß sehr wenig Volumenaufnahme, also unerwünschte Volumenänderungsarbeit unter Druckbeanspruchung verbunden ist. Vorzugsweise sind die Ventile 15,16 als federvorgespannte Rückschlagventile ausgebildet, welche im wesentlichen einen gehäuseseitigen Dichtsitz, einen vorzugsweise kugelförmigen Schließkörper, und einen Stößel umfassen. Die Schließkörper sind grundsätzlich bewegbar und können in eine Öffnungsstellung oder eine Schließstellung gebracht werden. Im unbetätigten Zustand müssen die Ventile 15,16 geöffnet sein, damit Bremsflüssigkeit aus dem Leitungssystem der Bremsanlage durch die Leitungsanschlüsse 10,11 die Kammern 8,9 und die Verbindungen 12,13 hindurch in den Bremsflüssigkeitsbehälter 14 gelangen kann. Dadurch wird beispielsweise sichergestellt, daß Bremsflüssigkeit sich temperaturbedingt ungehindert ausdehnen kann.
Damit im Rahmen einer Betätigung Bremsdruck aufgebaut werden kann, muß Sorge getragen werden, daß die Ventile 15,16 die genannten Verbindungen 12,13 möglichst zeitgleich sowie frühzeitig absperren. Ein verzögerter Verschluß der Verbindungen 12,13 führt zu unerwünschten Leerwegen, und ein nicht synchronisierter Verschluß zu einem zeitlich versetzten Bremsbeginn in den verschiedenen Bremskreisen. Beide Erscheinungen führen letztlich zu den bereits beschriebenen Komforteinbußen, Leistungsverringerungen oder sogar Sicherheitsrisiken (Schleudergefahr). Für einen Regeleingriff, beispielsweise zur Verbesserung der Fahrstabilität, ist es bei einem sogenannten geschlossenen Bremssystem ferner notwendig, daß Bremsflüssigkeit durch den Hauptzylinder 1 hindurch aus dem Behälter 14 nachgesaugt werden kann. Dies wird dadurch bewirkt, daß die im betätigten Zustand geschlossenen Rückschlagventile 15,16 bei einem Unterdruck in den Druckkammern 8,9 entgegen der Federvorspannkraft von ihren Dichtsitzen abgehoben werden.

Als Synchronisiervorrichtung 17 ist gemäß den Figuren ein stangenförmiger und unter der elastischen Vorspannung einer Feder 18 stehender bewegbarer Stellkörper 19 vorgesehen, welcher gemäß dem Ausführungsbeispiel axial in Betätigungsrichtung translatorisch bewegbar angeordnet ist und über Öffnungs- und/oder Schließelemente für die Ventile 15,16 verfügt. Der Stellkörper 19 ist zu diesem Zweck mit im Abstand zueinander vorgesehenen, im Vergleich zu Steuerflächen 20,21 verdickten, Führungskörpern in dem Gehäuse 4 geführt und verfügt im Bereich jeden Ventils 15,16 über keilförmig schräg stehende Steuerflächen 20, 21 welche nach dem Prinzip der schiefen Ebene aufgebaut sind. Die Steuerflächen 20,21 sind durch den Stellkörper 19 starr miteinander verbunden, so daß es zu einer synchronen Übertragung einer Stellbewegung auf die Ventile 15,16 kommt. An jede der Steuerflächen 20,21 ist der Stößel des zugeordneten Ventils 15,16 anlegbar und überträgt somit entsprechend der Kontur der Steuerfläche 20,21 den Stellzustand auf das betreffende Ventil 15,16. Ganz grundsätzlich ist es allerdings auch möglich, den Stellkörper 19 um seine eigene Achse drehbar in dem Gehäuse 4 anzuordnen, und im Bereich der Ventile 15,16 Exzenter oder Nocken (gegebenenfalls in Kombination mit Umlenkhebeln) für die Betätigung vorzusehen, ohne den Grundgedanken der Erfindung zu verlassen. Je nach Präferenz und dem gewünschten vorteilhaften Effekt wird der Fachmann eine dieser äquivalent wirksamen Prinzipien auswählen.

Schließlich greift der für die beiden Ventile 15,16 verantwortliche Stellkörper 19 mit Hilfe eines Mitnehmers 22 an dem Druckstangenkolben 6 an. Der Mitnehmer 22 ist erfindungsgemäß als elastisches Element und vorzugsweise als Blattfeder ausgebildet, deren Federrate steifer ist als die Federrate der Feder 18. Dies führt dazu, daß der Stellkörper 19 mit Hilfe des Mitnehmers 22 entgegen der Kraft der Feder 18 in eine unbetätigte Ausgangstellung gezogen wird. Die Ventile 15,16 sind geöffnet, weil die Stößel an einem größeren Durchmesser der Steuerflächen 20,21 anliegen, und somit die Schließkörper entgegen einer Schließfederkraft von dem Dichtsitz abgehoben werden.

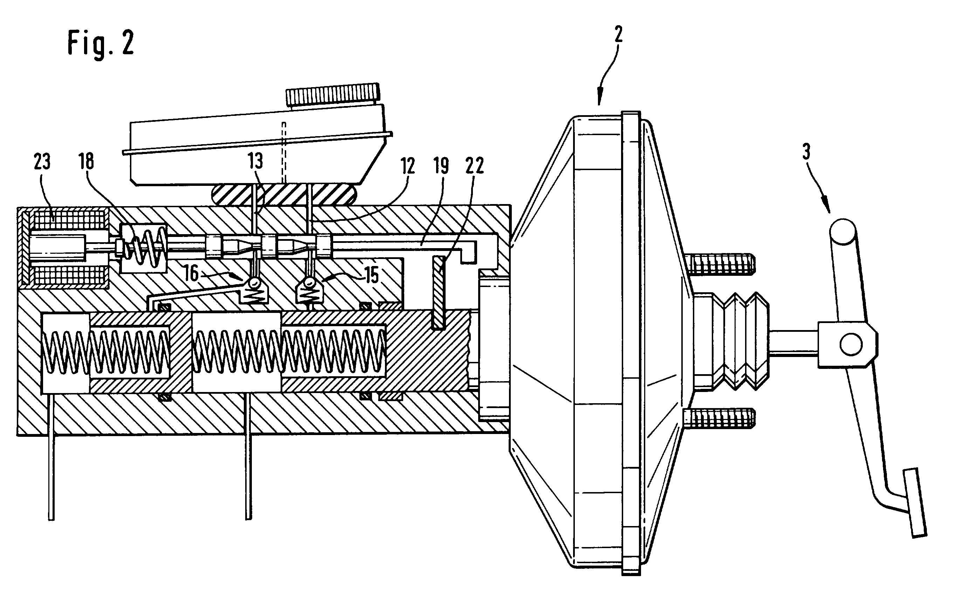

Der Fig. 2 ist ein (fahrerverursacht) betätigter Bremszustand entnehmbar, wobei der Mitnehmer 22 den Stellkörper freigibt und dieser unter der Kraft der Feder 18 in die Schließstellung gelangt. Die Stößel übertragen das entsprechende Stellsignal durch die Anlage an dem kleineren Durchmesser der Steuerflächen auf die Schließkörper, welche zur Anlage an dem zugeordneten Dichtsitz gelangen. Mit dem derart gleichzeitig (synchron) durch den einzigen Stellkörper 19 auf die Ventile 15,16 übertragenen Verschluß der Verbindungen 12,13 ist der Hauptzylinder für den Druckaufbau bereit.

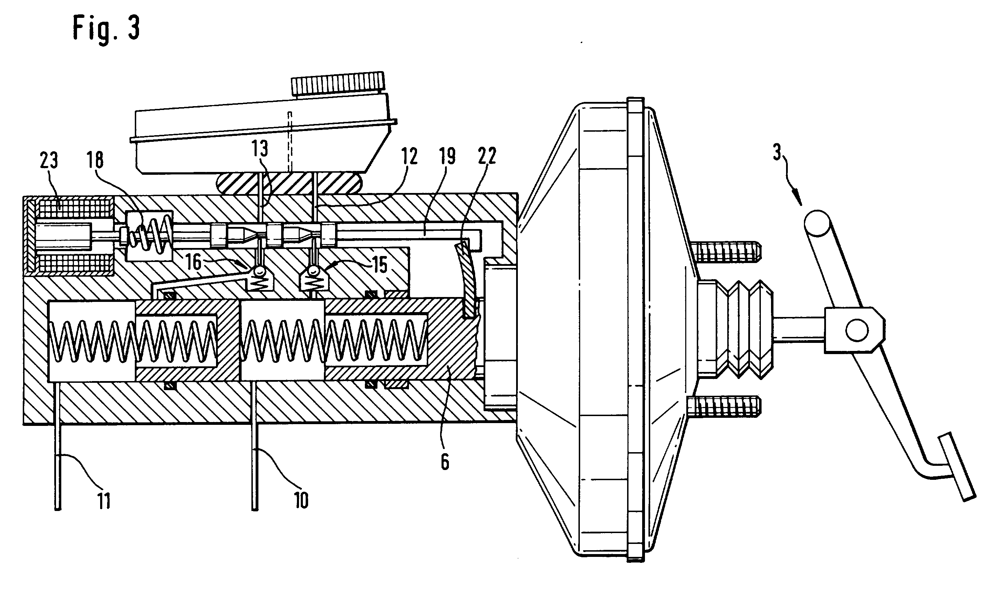

Die Erfindung ermöglicht neben einem fahrerbetätigungsabhängigen Schließen der Ventile 15, 16 auch ein fahrerunabhängige Schließen mit Hilfe einer elektromechanischen Betätigungsvorrichtung 23. Die Betätigungsvorrichtung 23 folgt vorzugsweise dem elektromagnetischen Prinzip und verfügt bei translatorisch bewegbaren Stellkörpern 19 meist über eine kostengünstige Spule-Anker-Baueinheit. Insbesondere für rotatorische bewegbare Stellkörper 19 sind Schrittmotorantriebe denkbar. Ganz grundsätzlich und bei besonderem Platzmangel sind allerdings auch Piezoquarzantriebe denkbar, ohne die Erfindung zu verlassen. Eine elektromechanische Betätigungsvorrichtung 23 ermöglicht schließlich einen Verschluß der Verbindungen 12, 13, bevor die Pedalanordnung 3, der Bremskraftverstärker 2 oder die Kolben 6, 7 bewegt wurden. Ein derartiger Betriebstall ist der Fig. 3 entnehmbar. Zu diesem Zweck ist das Kraftfahrzeug mit einer elektrischen Steuereinrichtung zur Erkennung bevorstehender Bremsungen ausgerüstet, welche im Bedarfsfall ein entsprechendes Verschlußsignal an die elektromechanische Betätigungsvorrichtung 23 abgibt.

Die Erkennung von Situationen, in denen eine Bremsung unmittelbar bevorsteht kann durch Beobachtung des Verkehrsgeschehens mittels Kameras, Radar, optischer Abstandssensorik, durch die Verwendung von Telemetriedaten, die von anderen Verkehrsteilnehmern und/oder einer Verkehrsinfrastruktur stammen, durch die Auswertung von Fahrzeugreaktionen wie zum Beispiel Schleudern oder Dritten und/oder durch Fahrerreaktionen wie z.B. plötzliche Hand- oder Fußbewegungen erfolgen. Der einfachste und naheliegende dieser Indikatoren ist ein plötzliches Loslassen des Gaspedals. Es versteht sich, daß die elektromechanische Betätigungsvorrichtung 23 hinsichtlich ihrer Kraftwirkung derart ausgelegt ist, daß sie im betätigten Zustand, zusammen mit der Kraft der Feder 18 die entgegen wirkende Federkraft des Mitnehmers 22 überwindet. Folglich können die Ventile 15, 16 auch auf diesem Wege in die Schließstellung gebracht werden. Dies hat den Vorteil, daß im Gegensatz zu dem in Fig. 2 dargestellten fahrerbetätigungsabhängigen Schließen der komplette Verfahrweg der Kolben 6, 7 zum hydraulischen Druckaufbau zur Verfügung steht und nicht zuerst ein Teil dieses Wegs zum Schließen der Ventile verloren geht. Daraus resultiert ein verbessertes Ansprechen der Bremsanlage und infolge dessen z.B. auch eine Verkürzung des Anhaltewegs bei einer Stillstandsbremsung.

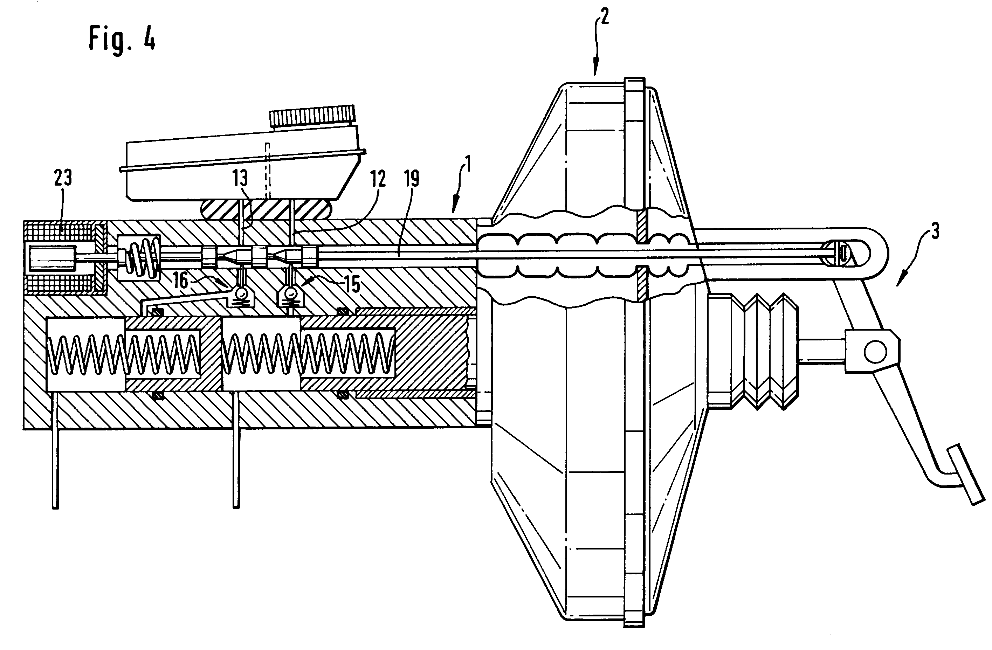

Eine andere Ausführungsform mit beschleunigter Schließcharakteristik ist der Figur 4 entnehmbar. Diese Ausführung unterscheidet sich dadurch von der vorstehend beschriebenen Ausführungsform, daß der Stellkörper 19 unmittelbar an der Pedalanordnung 3 angelenkt ist. Dadurch erfolgt das Schließen der Ventile 15,16 unmittelbar im Anschluß an eine Betätigungsbewegung der Pedalanordnung 3. Auf diesem Wege werden Verzögerungen, welche auf das Reaktionsverhalten des Bremskraftverstärkers zurückzuführen sind, und insbesondere bei Vakuumbremskraftverstärkern mit mehreren Arbeitskammern (sogenannte Tandembremskraftverstärkerstärker) ausgeprägt sind, vollständig vermieden. Mit anderen Worten erfolgt die Schließbewegung des Stellkörpers 19 und damit auch die Schließbewegung der Ventile 15,16 unabhängig von der Trägheit des Bremskraftverstärkers 2.

Alle in den Figuren gezeigten Varianten verfügen über den Vorteil, daß für die (fremdbetätigte) Verstellung der Ventile 15, 16 nur eine einzige, gewissermaßen zentrale elektromagnetische Betätigungsvorrichtung notwendig ist. In diesem Zusammenhang sei auf noch einen ganz wesentlichen Vorteil aller Ausführungsformen hingewiesen. Die Erfindung erlaubt nämlich einen sehr sicheren (fahrerbetätigten) Betrieb, selbst wenn die elektromechanische Betätigungsvorrichtung ausfallen sollte, denn das öffnen und Schließen der Ventile 15,16 kann davon unabhängig rein mechanisch durch Pedalbetätigung vorgenommen werden, was beispielsweise bei zwei rein elektrisch und unabhängig voneinander gesteuerten Ventilen 15,16 nicht möglich wäre.

Als weiterer Vorteil gegenüber bekannten Hauptzylinderbauformen ist hinzuzufügen, daß sich die Bauweise des Hauptzylinders 1 stark vereinfacht, weil für jeden Kolben 5,6 keine separat abgedichtete Nachlaufräume mit jeweils mindestens zwei Dichtungen, nämlich einer Primär- und einer Sekundärdichtung geschaffen werden müssen. Statt dessen reicht mit Hilfe der Ventile 15,16 prinzipiell eine einzige Dichtung je Kolben 6,7 für die Trennung der beiden Druckkammern 8,9 und für die Bereitstellung der Nachlauffunktion während eines Regeleingriffs aus.

## Patentansprüche

1. Hauptzylinder, insbesondere Tandem-Hauptbremszylinder für hydraulische Mehrkreisbremsanlagen von Kraftfahrzeugen, mit einem Gehäuse (4) mit Längsbohrung (5) für zwei hierin geführte Kolben (6,7), welche der Druckerzeugung in jeweils einer zugeordneten Druckkammer (8,9) im Gehäuse (4) dienen, und mit jeweils einer hydraulischen Verbindung (12,13) zwischen jeder Druckkammer (8,9) und einem Flüssigkeitsbehälter (14), welche jeweils ein Ventil (15,16) aufweist, welches die Verbindung (12,13) bei unbetätigter Bremsanlage für einen Druckausgleich öffnet, und die Verbindung (12,13) bei Bremsbetätigung oder beabsichtigter Bremsbetätigung für einen Druckanstieg verschließt, **dadurch gekennzeichnet**, daß eine Synchronisiervorrichtung (17) mit Öffnungs- und/oder Schließelementen zum synchronisiert zeitgleichen Öffnen und/oder Schließen der beiden Ventile (15,16) derart vorgesehen ist, daß sie eine öffnende oder schließende Stellbewegung auf beide Ventile (15,16) überträgt, so daß der Druckanstieg oder der Druckausgleich in wenigstens zwei Bremskreisen gleichzeitig erfolgt.

2. Hauptzylinder nach Anspruch 1, **dadurch gekennzeichnet,** daß die Synchronisiervorrichtung (17) zwischen den beiden Ventilen (15,16) bewegbar angeordnet ist, und daß die Öffnungs- und/oder Schließelemente, welche die Öffnungs- oder Schließbewegung des ersten und des zweiten Ventils (15,16) bewirken, starr miteinander verbunden sind.

3. Hauptzylinder nach einem oder mehreren der vorhergehenden Ansprüche, **dadurch gekennzeichnet**, daß die Hauptzylinder (17) stangenförmig ist, und im Bereich eines jeden Ventils (15,16) als Öffnungs- und/oder Schließelement eine Steuerfläche (20,21) aufweist, welche eine Stellbewegung der Synchronisiervorrichtung (17) in eine Ventilbewegung überträgt.

4. Hauptzylinder nach einem oder mehreren der vorhergehenden Ansprüche, **dadurch gekennzeichnet**, daß die Synchronisiervorrichtung (17) relativ zu den Ventilen (15,16) translatorisch verschiebbar angeordnet ist, und daß keilförmige Steuerflächen (20,21) vorgesehen sind.

5. Hauptzylinder nach einem oder mehreren der vorhergehenden Ansprüche, **dadurch gekennzeichnet**, daß die Synchronisiervorrichtung (17) um Ihre eigene Achse rotatorische verdrehbar gelagert ist, und daß für die Ventilsteuerung Nocken oder Exzenter als Steuerflächen (20,21) vorgesehen sind.

6. Hauptzylinder nach einem oder mehreren der vorhergehenden Ansprüche, **dadurch gekennzeichnet**, daß die Synchronisiervorrichtung (17) an einem ersten Kolben (6) angreift.

7. Hauptzylinder nach Anspruch 6, **dadurch gekennzeichnet**, daß zwischen dem ersten Kolben (6) und der Synchronisiervorrichtung (17) ein Mitnehmer (22) vorgesehen ist, welcher eine Verschiebung des Kolbens (6) auf die Synchronisiervorrichtung (17) überträgt.

8. Hauptzylinder nach Anspruch 7, **dadurch gekennzeichnet**, daß als Mitnehmer (22) ein elastisches Element vorgesehen ist.

9. Hauptzylinder nach Anspruch 8, **dadurch gekennzeichnet**, daß als elastisches Element eine Blattfeder vorgesehen ist.

10. Hauptzylinder nach einem oder mehreren der vorhergehenden Ansprüche, **dadurch gekennzeichnet**, daß eine elektromechanische Betätigungsvorrichtung (23) vorgesehen ist, welche an der Synchronisiervorrichtung (17) angreift.

11. Hauptzylinder nach Anspruch 10, **dadurch gekennzeichnet**, daß die Synchronisiervorrichtung (17) unabhängig von einer Bewegung des ersten Kolbens (6) mit Hilfe der elektromechanischen Betätigungsvorrichtung (23) ansteuerbar ist.

12. Hauptzylinder nach Anspruch 10 oder 11, **dadurch gekennzeichnet**, daß eine elektromagnetische Betätigungsvorrichtung vorgesehen ist.

13. Hauptzylinder nach einem der Ansprüche 10 oder 11, **dadurch gekennzeichnet**, daß eine piezoelektrische Betätigungsvorrichtung mit einem elektrisch beaufschlagbaren Piezoquarzkristall vorgesehen ist, welcher Maßänderungen durchmacht.

14. Hauptzylinder nach einem oder mehreren der vorhergehenden Ansprüche, **dadurch gekennzeichnet**, daß die Synchronisiervorrichtung (17) unmittelbar an einer im Bereich einer Betätigungsperson angeordneten Betätigungsstange oder einem Bremspedal (3) derart angelenkt ist, daß ausgehend von einer unbetätigten Pedalstellung eine Auslenkung des Bremspedals (3) zu einer Verschiebung der Synchronisiervorrichtung (17) und zu einer entsprechenden Verschiebung der Ventile (15,16) führt.
